Europäisches Patentamt

European Patent Office

Office européen des brevets

(11) Publication number: 0 364 160 A2

# EUROPEAN PATENT APPLICATION

(21) Application number: 89310204.6

(51) Int. Cl.⁵: G01V 1/20

(22) Date of filing: 05.10.89

(30) Priority: 08.10.88 GB 8823673

(43) Date of publication of application:
18.04.90 Bulletin 90/16

(84) Designated Contracting States:
DE FR SE

(71) Applicant: WYATT, Roy
4 Canterbury Close
Lee-on-Solent, Hampshire(GB)

(72) Inventor: WYATT, Roy
4 Canterbury Close
Lee-on-Solent, Hampshire(GB)

(74) Representative: Boutland, John Anthony et al
Prudential Buildings Room 24 97-101 Above
Bar Street
Southampton SO9 4GT Hampshire(GB)

(54) Improvements in or relating to arrays.

(57) A geophysical survey array 1 towable over ice 3 comprises a filamentary body 2 of rectangular cross-section.

Hcused within the body 2 is a pair of laterally-spaced, longitudinally extending towing cables 4, plus a plurality of upright disposed sensors 5.

The rectangular cross-section of the array body 2 ensures good sliding contact between the body and the ice 3 and also provides the sensors 5 with a substantially constant reference to the ice surface 3.

The use of the two laterally-spaced towing cables provides the array with a high righting moment and thus stability when towed.

FIG.3.

## Improvements in or relating to Arrays

This invention relates to arrays and provides an array for towing behind a vehicle engaged in geophysical survey activities over ice.

According to the invention, an array comprises a filamentary body formed so as to be towable in sliding contact with a support surface, and, housed within the body, a pair of laterally-spaced, longitudinally extending towing members and a plurality of sensors.

An embodiment of the invention will now be described by way of example only, with reference to the accompanying drawings, wherein

Figure 1 is a fragmentary side view of the array,

Figure 2 is an enlarged view, in section, of the area of Figure 1 enclosed by the circle II,

Figure 3 is an end view section, taken on the lines III-III of Figure 2, and

Figure 4 is a plan view of the leading end of the array.

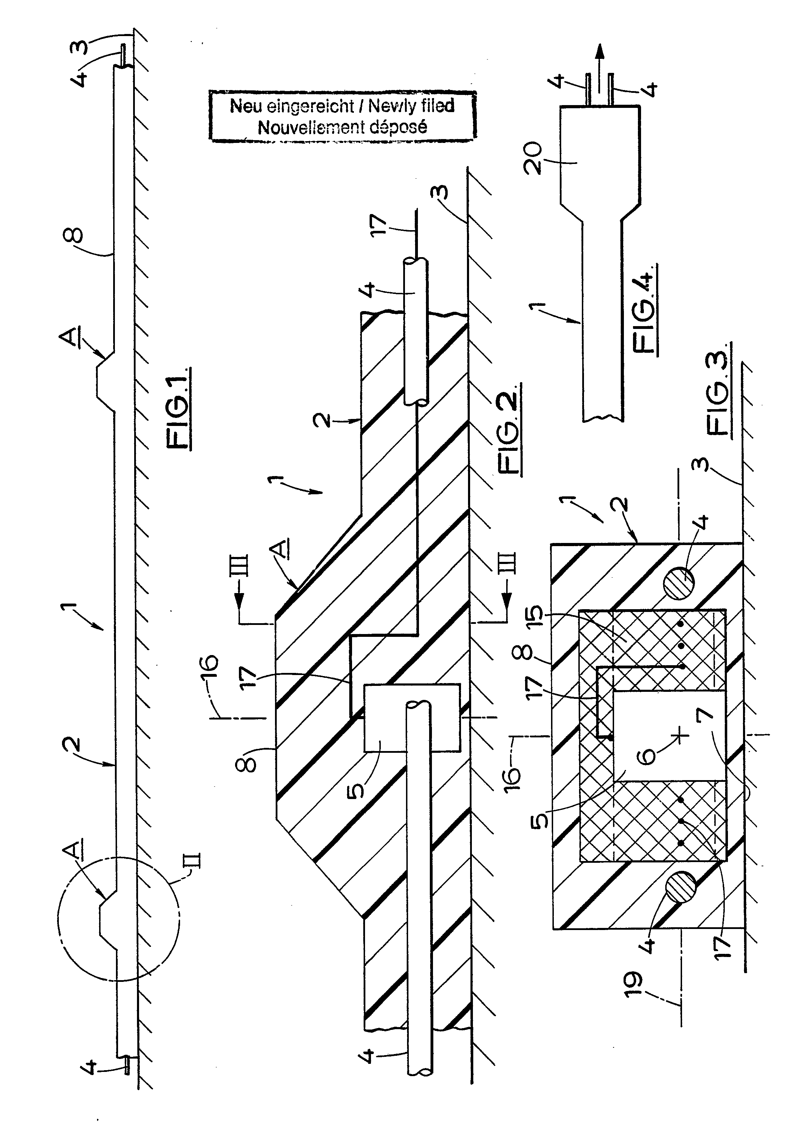

With reference to Figures 1 to 3, a towable array 1 comprises a filamentary body 2 formed so as to be towed in sliding contact with a supporting ice surface 3, and, housed within the body 2, a pair of laterally-spaced, longitudinally extending towing members 4 and a plurality of sensors 5.

The streamer-like array 1 is towed across the ice surface 3 by a "SNOCAT" (R.T.M.) tracked vehicle (not shown). The leading ends of the towing members 4 are connected to the towing vehicle by way of a spreader bar. (Not shown). The array body 2, which is of flexible form, is of rectangular cross-section, viewed along its longitudinal axis 6, as shown in Figure 3. The cross-section is enlarged at regular longitudinally-spaced discrete positions A in the vicinity of the sensors 5.

Being of rectangular cross-section, the array body 2 presents a flat lower surface 7 to the ice 3, whereby any tendency for the array body to overturn is substantially resisted while good sliding contact with the ice is preserved.

The upper and lower surfaces of the array body 2 are coloured differently. The upper surface 8 of the array body 2 is coloured white, while the lower surface 7 is coloured a contrasting bright red. The white upper surface reduces the absorbtion of solar heat. The red bottom surface 7 gives an observer instant warning that at least part of the array 1 has overturned while being towed.

The array body 2 is of flexible construction and is made of plastics material. Except for a core portion 15, the body 2 is of polyester based polyurethane. The upper and lower surfaces 7, 8, which are of the same material, comprise cast-in layers.

The core portion 15 of the array body 2 is of cellular foam, which provides buoyancy. (If needed). For reasons of clarity, the core portion 15 is shown only in Figure 3.

The sensors 5 of this example comprise geophones, aligned on axes 16 disposed substantially normal to the longitudinal axis 6 of the array body 2, and thus, because of the rectangular cross-section of the body, also disposed substantially normal to the ice surface 3. Thus the upright-disposed sensors 5 are provided with a substantially constant reference to the ice surface 3.

Signal conductors 17 connect the sensors 5 with recording equipment (not shown), carried by the vehicle towing the array 1. Figure 3 shows several conductors 17, each connected to, and extending longitudinally from, a sensor 5.

The sensors 5 and associated signal conductors 17 are all housed within the cellular core portion 15. The longitudinally extending conductors 17 and the towing members 4 are all disposed in a common plane 19 (Figure 3) which extends longitudinally through the array body 2. The longitudinal axis 6 of the array body 2 is contained within the plane 19.

Disposing the conductors 17 and towing members 4 in the common longitudinal plane 19 reduces the application of bending forces to the conductors 17 as the array body 2 flexes during towing operations.

The towing members 4 comprise multi-strand steel ropes. Use of two laterally-spaced towing members provides the array 1 with a substantial righting moment and therefore substantial stability.

With reference to Figure 4, the array 1 is preferably provided with a faired lead extension 20, which assists in reducing drag forces created during towing of the array.

The invention provides a flexible, lightweight array 1, easily towable in a stable manner.

The array 1 need not be towed in order to function. Instead, it could be used in a static mode.

The cellular foam 15 could be replaced by non-cellular material.

Use of the array is not restricted to geophysical survey.

More than two towing members 4 may be employed, if desired.

## Claims

1. An array comprising a filamentary body formed so as to be towable in sliding contact with a support surface, and, housed within the body, a pair of laterally-spaced, longitudinally extending towing members, and a plurality of sensors.

2. An array as claimed in Claim 1, wherein the array body is of rectangular cross-section, viewed along its longitudinal axis.

3. An array as claimed in Claim 1 or 2, wherein the sensors comprise geophones aligned on axes disposed substantially normal to the longitudinal axis of the array body.

4. An array as claimed in Claim 1, 2 or 3, wherein the lower surface of the array is coloured differently to the upper surface thereof.

5. An array as claimed in any one of Claims 1 to 4, wherein the array body is of plastics material.

6. An array as claimed in Claim 5, wherein the body is provided with a core of plastics material.

7. An array as claimed in any one of Claims 1 to 6, wherein the leading end thereof is provided with a faired extension.

8. An array as claimed in any one of Claims 1 to 7, wherein signal conductors are connected to and extend longitudinally from, the sensors, and the conductors and towing members are disposed in a common longitudinally-extending plane.

Neu eingereicht / Newly filed
Nouvellement déposé

FIG.1.

FIG 2.

FIG.4.

FIG.3.